# EUROPEAN PATENT APPLICATION

(11) **EP 4 425 408 A1**
(43) Date of publication of application: **04.09.2024**
(21) Application number: 22885992.2
(22) Date of filing: 26.10.2022
(51) Int. Cl.: G06Q 20/32

(54) **DIGITAL CURRENCY TRANSACTION METHOD AND SYSTEM, AND RELATED TRANSACTION TERMINALS**

(30) Priority: 27.10.2021 CN 202111255878
(71) Applicant: DIGITAL CURRENCY INSTITUTE, THE PEOPLE'S BANK OF CHINA, Beijing 100071 (CN)
(72) Inventor: MU, Changchun, Beijing 100071 (CN); DI, Gang, Beijing 100071 (CN); CUI, Peidong, Beijing 100071 (CN); ZHAO, Xinyu, Beijing 100071 (CN); GUO, Jianchang, Beijing 100071 (CN); YUAN, Qiao, Beijing 100071 (CN)
(74) Representative: Winter, Brandl - Partnerschaft mbB
(86) International application number: PCT/CN2022/127547
(87) International publication number: WO 2023/072115

(57) **Abstract**

The present disclosure provides a digital currency transaction method and system, and related transaction terminals, and relates to the field of computer technology. A specific implementation of the method includes: exchanging, by a first transaction terminal, user certificates with a second transaction terminal to verify user identities of the two parties after establishing a communication connection with the second transaction terminal, negotiating with the second transaction terminal to generate a transaction factor after confirming that the user identity verification of the two parties succeeds, and uploading first digital currency transaction information including the transaction factor to a first operating institution back-end system, and sending, by the first operating institution back-end system, the first digital currency transaction information to a second operating institution back-end system to complete the digital currency transaction. This implementation achieves separation between identity verification and the transaction, reduces user interaction steps, simplifies the transaction process, is not limited by the transaction distance, supports both password-free and password-verified payments, and eliminates the need for a second touch during password verification, thereby greatly shortening the touch time, and enhancing the transaction security.

## Description

### Cross-Reference to Related Application

The present disclosure claims the priority of Chinese Patent Application No.202111255878.6, entitled "Digital Currency Transaction Method and System, and Related Transaction Terminals", filed on October 27, 2021, the entire contents of which are incorporated herein by reference as part or all of the present disclosure.

### Technical Field

The present disclosure relates to the field of computer technology, and in particular to a digital currency transaction method and system, and related transaction terminals.

### Background

In the related art online transaction of digital currencies, the payee and the payer make payments by the manner of transferring an online account token through a two-dimensional code or near field communication (NFC). Users need to enter a digital currency application (App) to obtain payment or collection information, resulting in numerous user interaction steps. In the near-field payment, a second touch is required during password verification, which leads to a poor user payment experience. In addition, a conventional two-dimensional code payment method is likely to be copied and stolen, resulting in low security.

In the process of implementing the present disclosure, the inventor found that there are at least the following problems in the related art: numerous user interaction steps, complicated transaction processes, the need for a second touch during password verification, long touch time, and poor transaction security.

### Summary

In view of this, embodiments of the present disclosure provide a digital currency transaction method and system, and related transaction terminals.

According to an aspect of an embodiment of the present disclosure, a digital currency transaction method is provided.

The digital currency transaction method includes: exchanging, by a first transaction terminal, user certificates with a second transaction terminal after establishing a communication connection with the second transaction terminal, the exchanged user certificates being used for mutual verification of user identities between the first transaction terminal and the second transaction terminal; negotiating, by the first transaction terminal, with the second transaction terminal to generate a transaction factor after confirming that the user identity verification of both the first transaction terminal and the second transaction terminal succeeds; and uploading, by the first transaction terminal, first digital currency transaction information comprising the transaction factor to a first operating institution back-end system, and sending, by the first operating institution back-end system, the first digital currency transaction information to a second operating institution back-end system to complete a digital currency transaction, wherein the first operating institution back-end system is an operating institution back-end corresponding to the first transaction terminal, the second operating institution back-end system is an operating institution back-end corresponding to the second transaction terminal, and the transaction factor is configured to verify the first digital currency transaction information by the second operating institution back-end system.

According to one or more embodiments of the present disclosure, the first transaction terminal establishes the communication connection with the second transaction terminal through short-range communication.

According to one or more embodiments of the present disclosure, the first transaction terminal uses an operating institution certificate that corresponds to the second transaction terminal to verify a user certificate of the second transaction terminal, so as to verify a user identity of the second transaction terminal, wherein the operating institution certificate is stored in a local security chip of the first transaction terminal.

According to one or more embodiments of the present disclosure, the first digital currency transaction information further includes relevant information of a digital currency, wherein the relevant information of the digital currency includes a digital currency string and/or account information of the digital currency.

According to one or more embodiments of the present disclosure, before the uploading, by the first transaction terminal, first digital currency transaction information comprising the transaction factor to a first operating institution back-end system, the method includes: adding a private key signature of the first transaction terminal to the first digital currency transaction information, wherein the private key signature is configured to verify transaction intention of the first transaction terminal by the first operating institution back-end system.

According to one or more embodiments of the present disclosure, the first transaction terminal generates the transaction factor by invoking a preset key algorithm through a local security chip, wherein the transaction factor is in a form of a character string.

According to one or more embodiments of the present disclosure, the first transaction terminal uploads the first digital currency transaction information comprising the transaction factor to the first operating institution back-end system after determining that a current transaction adopts a password-free transaction or a current inputted transaction password is correct.

According to another aspect of an embodiment of the present disclosure, a first transaction terminal for digital currency transactions is provided.

The first transaction terminal for digital currency transactions includes: a first communication module, configured to establish a communication connection with a second transaction terminal, and exchange user certificates with the second transaction terminal, a user certificate of the first transaction terminal being configured to verify a user identity of the first transaction terminal by the second transaction terminal; an identity verification module, configured to use a user certificate of the second transaction terminal to verify a user identity of the second transaction terminal; a transaction factor generation module, configured to negotiate with the second transaction terminal to generate a transaction factor after confirming that the user identity verification of both the first transaction terminal and the second transaction terminal succeeds; and a second communication module, configured to upload first digital currency transaction information comprising the transaction factor to a first operating institution back-end system, wherein the first operating institution back-end system sends the first digital currency transaction information to a second operating institution back-end system to complete a digital currency transaction, the first operating institution back-end system is an operating institution back-end corresponding to the first transaction terminal, the second operating institution back-end system is an operating institution back-end corresponding to the second transaction terminal, and the transaction factor is configured to verify the first digital currency transaction information by the second operating institution back-end system.

According to another aspect of an embodiment of the present disclosure, a digital currency transaction system is provided.

The digital currency transaction system includes: a digital currency transaction system, comprising the first transaction terminal, and further comprising a second transaction terminal, a first operating institution back-end system, and a second operating institution back-end system, wherein the first operating institution back-end system is an operating institution back-end corresponding to the first transaction terminal, and the second operating institution back-end system is an operating institution back-end corresponding to the second transaction terminal; wherein the second transaction terminal is, configured to use the user certificate of the first transaction terminal to verify the user identity of the first transaction terminal, and upload a second digital currency transaction information comprising the transaction factor to the second operating institution back-end system; the first operating institution back-end system is, configured to upload the first digital currency transaction information to the second operating institution back-end system; and the second operating institution back-end system is, configured to verify the first digital currency transaction information based on the second digital currency transaction information, and perform the digital currency transaction in a case that the verification of the first digital currency transaction information succeeds.

According to another aspect of an embodiment of the present disclosure, an electronic device is provided.

The electronic device includes: one or more processors; and a memory configured to store one or more programs, wherein when the one or more programs are executed by the one or more processors, the one or more processors implement the digital currency transaction method provided in this embodiment of the present disclosure.

According to another aspect of an embodiment of the present disclosure, a computer-readable medium is provided.

The computer-readable medium stores a computer program. The computer program, when executed by a processor, implements the digital currency transaction method provided in this embodiment of the present disclosure.

Further effects of the foregoing non-conventional optional methods will be described below in conjunction with specific implementations.

### Brief Description of the Drawings

The accompanying drawings are used for a better understanding of the present disclosure, which do not constitute improper limitations on the present disclosure.
Fig. 1 is a schematic diagram of main steps of a digital currency transaction method according to an embodiment of the present disclosure;
Fig. 2 is a schematic diagram of a digital currency transaction process according to an embodiment of the present disclosure;
Fig. 3 is a schematic diagram of main modules of a first transaction terminal for digital currency transactions according to an embodiment of the present disclosure;
Fig. 4 is a schematic diagram of main components of a digital currency transaction system according to an embodiment of the present disclosure;
Fig. 5 is a diagram of an exemplary system architecture to which the embodiments of the present disclosure can be applied; and
Fig. 6 is a structural schematic diagram of a computer system suitable for implementing the terminal device in this embodiment of the present disclosure.

### Detailed Description of the Embodiments

Exemplary embodiments of the present disclosure are described in conjunction with the accompanying drawings below, which include various details of the embodiments of the present disclosure to facilitate understanding, and should be considered as exemplary only. Therefore, those of ordinary skill in the art should realize that the embodiments described herein can be variously transformed and modified without departing from the scope and spirit of the present disclosure. Similarly, for clarity and brevity, descriptions of well-known functions and structures are omitted in the following descriptions.

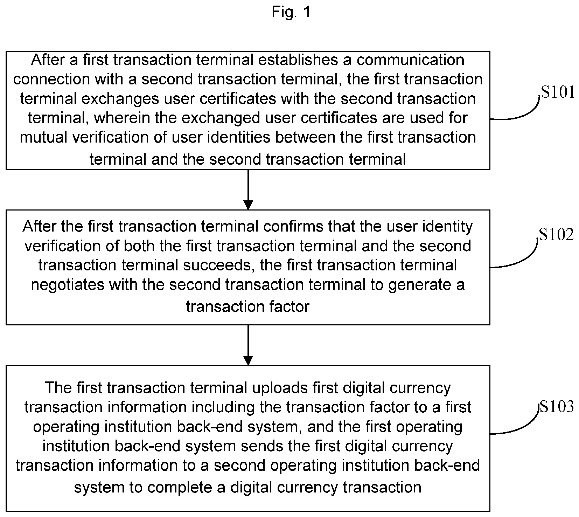

Fig. 1 is a schematic diagram of the main steps of a digital currency transaction method according to an embodiment of the present disclosure.

As shown in Fig. 1, a digital currency transaction method according to an embodiment of the present disclosure mainly includes the following steps S101 to S103.

Step S101: After a first transaction terminal establishes a communication connection with a second transaction terminal, the first transaction terminal exchanges user certificates with the second transaction terminal, wherein the exchanged user certificates are used for mutual verification of user identities between the first transaction terminal and the second transaction terminal.

Step S102: After the first transaction terminal confirms that the user identity verification of both the first transaction terminal and the second transaction terminal succeeds, the first transaction terminal negotiates with the second transaction terminal to generate a transaction factor.

Step S103: The first transaction terminal uploads first digital currency transaction information including the transaction factor to a first operating institution back-end system, and the first operating institution back-end system sends the first digital currency transaction information to a second operating institution back-end system to complete a digital currency transaction.

The first operating institution back-end system is an operating institution back-end corresponding to the first transaction terminal. The second operating institution back-end system is an operating institution back-end corresponding to the second transaction terminal.

The transaction factor is configured to verify the first digital currency transaction information by the second operating institution back-end system.

In an embodiment, the first transaction terminal establishes the communication connection with the second transaction terminal through short-range communication.

The first transaction terminal and the second transaction terminal are both parties involved in the transaction. The first transaction terminal may serve as a payer and the second transaction terminal may serve as a payee, or alternatively, the second transaction terminal may serve as a payer and the first transaction terminal may serve as a payee.

Correspondingly, the first operating institution back-end system sends the first digital currency transaction information to the second operating institution back-end system to complete the digital currency transaction. For example, the operating institution back-end for the payee can send the first digital currency transaction information to the operating institution back-end for the payer, and the transfer is initiated by the payer. Alternatively, the operating institution back-end for the payer can send the first digital currency transaction information to the operating institution back-end for the payee, and deduction is initiated by the payee.

In an embodiment, the first transaction terminal uses an operating institution certificate that corresponds to the second transaction terminal to verify a user certificate of the second transaction terminal, so as to verify a user identity of the second transaction terminal, wherein the operating institution certificate is stored in a local security chip of the first transaction terminal. A public key of an operating institution in the operating institution certificate may be used for verifying the user certificate (with a private key signature of the operating institution) of the second transaction terminal.

In an embodiment, the first digital currency transaction information further includes relevant information of a digital currency, wherein the relevant information of a digital currency includes a digital currency string and/or account information of the digital currency.

In an embodiment, before the first transaction terminal uploads the first digital currency transaction information including the transaction factor to the first operating institution back-end system, the first transaction terminal may add a private key signature of the first transaction terminal to the first digital currency transaction information, wherein the private key signature is configured to verify the transaction intention of the first transaction terminal by the first operating institution back-end system.

In an embodiment, the first transaction terminal may be generated the transaction factor by invoking a preset key algorithm through a local security chip. The preset key algorithm may be a commonly used key algorithm, as long as the preset key algorithm may be configured to negotiate a transaction factor with a certain data structure by the two parties.

The transaction factor may be in the form of a character string, and the data structure of the transaction factor may be, for example, the number of digits in the character string.

In an embodiment, the first transaction terminal uploads the first digital currency transaction information including the transaction factor to the first operating institution back-end system after determining that a current transaction adopts a password-free transaction or a current inputted transaction password is correct.

This embodiment of the present disclosure is based on security chip-loaded certificate system technology and near-field communication technology. After the terminal sides (i.e., the first transaction terminal and the second transaction terminal) authenticate the two parties involved in the transaction, the terminal sides jointly negotiate the transaction factor. The two parties upload the transaction factor to the operating institution back-end over the Internet for verification. Once the verification is successfully matched, the online payment and collection are initiated, thereby greatly improving the convenience and security of digital currency transactions, significantly shortening transaction time, and reducing the risk of payment and collection information being stolen.

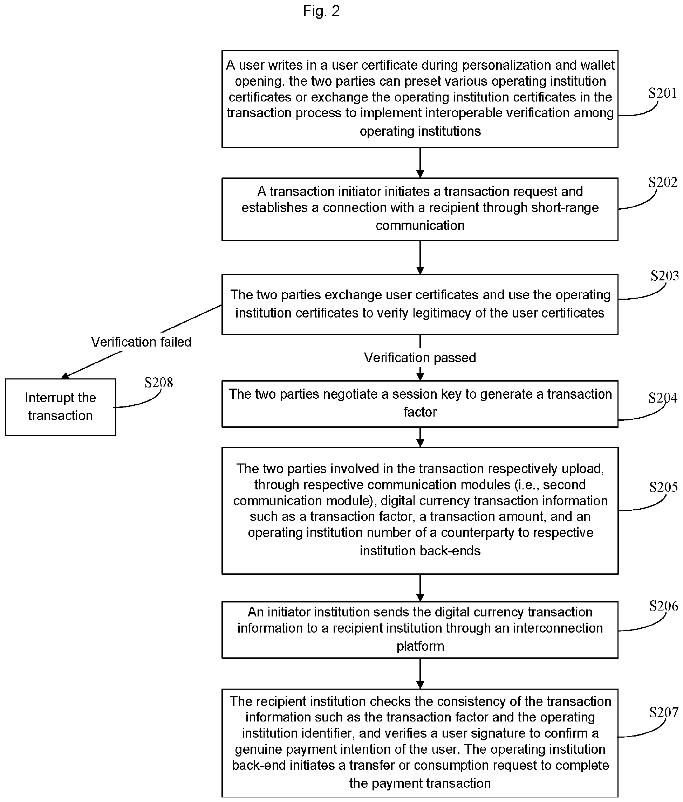

According to this embodiment of the present disclosure, the two parties involved in the transaction only perform identity authentication on the terminal sides to confirm that the two parties are legitimate users of the operating institution, and then an online operating institution confirms the initiation of the payment process. A digital currency transaction process according to an embodiment of the present disclosure is shown in Fig. 2. A user writes in a user certificate during personalization and wallet opening. the two parties can preset various operating institution certificates or exchange the operating institution certificates in the transaction process to implement interoperable verification among operating institutions (S201). A transaction initiator initiates a transaction request and establishes a connection with a recipient through short-range communication (S202). The two parties exchange user certificates and use the operating institution certificates to verify legitimacy of the user certificates (S203). In the case that the above verification is successful, the two parties negotiate a session key to generate a transaction factor (S204), and proceed to S205. In the case that the above verification fails, the transaction is interrupted (S208). The two parties involved in the transaction respectively upload, through respective communication modules (i.e., second communication module), digital currency transaction information such as a transaction factor, a transaction amount, and an operating institution number of a counterparty to respective institution back-ends (S205). The transaction information should include a private key signature from a terminal side. An initiator institution sends the digital currency transaction information to a recipient institution through an interconnection platform (S206). The recipient institution checks the consistency of the transaction information such as the transaction factor and the operating institution identifier, and verifies a user signature to confirm a genuine payment intention of the user. The operating institution back-end initiates a transfer or consumption request to complete the payment transaction (S207). If a payment password is required, the payer can input the payment password through a terminal side application. The initiator institution is a first operating institution back-end system, and the recipient institution is a second operating institution back-end system.

According to this embodiment of the present disclosure, the user can touch a screen of a mobile phone that is off. After the touch, the two parties do not need to maintain a touch operation, and a payer application can be invoked for password entry, which solves the problem of password-free payment risks. Moreover, in the case that password verification is required, there is no need for a second touch. Instead, the digital currency transaction information (i.e., transaction information) is transmitted between the operating institution back-end systems, greatly enhancing user experience and security. When this embodiment of the present disclosure is particularly applied to Near Field Communication (NFC), the both terminal sides can simply touch for identity authentication and then separate. There is no need for subsequent transaction information transfer on the terminal sides. In the case of the short transaction distance of NFC, the touch time is greatly shortened, and the user experience is enhanced. For subsequent transaction information initiated by the operating institution back-end, payment can be performed either by uploading a digital currency from the terminal side or by using the account balance of the user. In the case that the two parties are networked, the transaction speed is increased. In the case that there is no network for the two parties, dual-offline transaction can still be performed using a digital currency stored on the security chip, improving the scalability and coverage of the transaction.

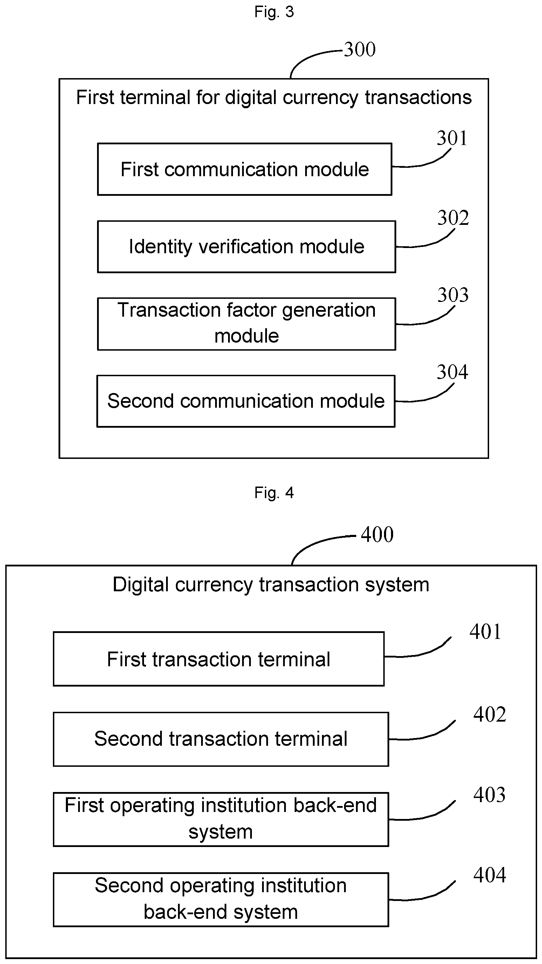

Fig. 3 is a schematic diagram of main modules of a first transaction terminal for digital currency transactions according to an embodiment of the present disclosure. As shown in Fig. 3, a first transaction terminal 300 for digital currency transactions according to an embodiment of the present disclosure mainly includes the following modules: a first communication module 301, an identity verification module 302, a transaction factor generation module 303, and a second communication module 304.

The first communication module 301 is configured to establish a communication connection with a second transaction terminal, and exchange user certificates with the second transaction terminal, the user certificate of the first transaction terminal being configured to verify a user identity of the first transaction terminal by the second transaction terminal.

The identity verification module 302 is configured to use the user certificate of the second transaction terminal to verify a user identity of the second transaction terminal.

The transaction factor generation module 303 is configured to negotiate with the second transaction terminal to generate a transaction factor after confirming that the user identity verification of both the first transaction terminal and the second transaction terminal succeeds.

The second communication module 304 is configured to upload first digital currency transaction information including the transaction factor to a first operating institution back-end system. The first operating institution back-end system sends the first digital currency transaction information to a second operating institution back-end system to complete the digital currency transaction. The first operating institution back-end system is an operating institution back-end corresponding to the first transaction terminal. The second operating institution back-end system is an operating institution back-end corresponding to the second transaction terminal. The transaction factor is configured to verify the first digital currency transaction information by the second operating institution back-end system.

In an embodiment, the first communication module 301 may be specifically configured to establish the communication connection with the second transaction terminal through short-range communication.

In an embodiment, the identity verification module 302 is specifically configured to use an operating institution certificate that corresponds to the second transaction terminal to verify the user certificate of the second transaction terminal, thereby verifying the user identity of the second transaction terminal, wherein the operating institution certificate is stored in a local security chip of the first transaction terminal.

In an embodiment, the first digital currency transaction information further includes relevant information of a digital currency, wherein the relevant information of the digital currency includes a digital currency string and/or account information of the digital currency.

In an embodiment, the first transaction terminal 300 may further include a signature module, the signature module may be configured to add a private key signature of the first transaction terminal to the first digital currency transaction information. The private key signature is configured to verify the transaction intention of the first transaction terminal by the first operating institution back-end system.

In an embodiment, the transaction factor generation module 303 may be specifically configured to generate the transaction factor by invoking a preset key algorithm through the local security chip.

The transaction factor is specifically in the form of a character string.

In an embodiment, the second communication module 304 is specifically configured to upload the first digital currency transaction information including the transaction factor to the first operating institution back-end system after determining that the current transaction adopts a password-free transaction or a current inputted transaction password is correct.

Fig. 4 is a schematic diagram of the main components of a digital currency transaction system according to an embodiment of the present disclosure. As shown in Fig. 4, a digital currency transaction system 400 according to an embodiment of the present disclosure mainly includes: a first transaction terminal 401, a second transaction terminal 402, a first operating institution back-end system 403, and a second operating institution back-end system 404. The first operating institution back-end system 403 is an operating institution back-end corresponding to the first transaction terminal 401. The second operating institution back-end system 404 is an operating institution back-end corresponding to the second transaction terminal 402.

The second transaction terminal 402 is configured to use the user certificate of the first transaction terminal 401 to verify the user identity of the first transaction terminal 401, and to upload second digital currency transaction information including a transaction factor to the second operating institution back-end system 404.

The first operating institution back-end system 403 is configured to upload the first digital currency transaction information to the second operating institution back-end system 404.

The second operating institution back-end system 404 is configured to verify the first digital currency transaction information based on the second digital currency transaction information. In the case that the verification of the first digital currency transaction information succeeds, the digital currency transaction is performed.

In an embodiment, both the first digital currency transaction information and the second digital currency transaction information further include a transaction amount. The first digital currency transaction information further includes a second operating institution identifier, and the second digital currency transaction information further includes a first operating institution identifier.

The second operating institution back-end system 404 is specifically configured to verify the first digital currency transaction information by verifying the transaction factors, operating institution identifiers, and transaction amounts in the second digital currency transaction information and the first digital currency transaction information.

The specific functions of the first transaction terminal 401 are the same as the specific functions of the first transaction terminal 300 described above. Please refer to the introduction of the first transaction terminal 300.

Both the first transaction terminal 401 and the second transaction terminal 402 may be locally provided with a security chip, a terminal short-range communication module, and a terminal communication module.

The terminal short-range communication modules are configured to establish a payment channel between the two parties and to transmit transaction information such as certificates. The communication methods may include near field communication (NFC), Bluetooth communication, wireless local area network (WLAN) direct, ultra wide band (UWB), etc. The terminal short-range communication module of the first transaction terminal 401 has the same function as the function of the first communication module 301 described above. Please refer to the introduction of the first communication module 301. The terminal communication modules are configured to establish a communication connection between the terminals and the operating institution back-ends, and to transmit the transaction information to the operating institution back-ends. The functions of the terminal communication module of the first transaction terminal 401 are the same as the functions of the second communication module 304 described above. Please refer to the introduction of the second communication module 304. For the terminal short-range communication module and the terminal communication module of the second transaction terminal 402, please refer to the introduction of the first communication module 301 and the second communication module 304 as above.

The security chip is responsible for logical operations of transactions and storage of sensitive information, including key contents such as digital currency applications, institution certificates, user public key certificates, user private keys, etc. The digital currency application is configured to process a transaction authentication process, and to perform encryption, decryption, signing, and signature verification operations. The institution certificate is used for verifying the user public key certificate, and the public key certificate is used for verifying a user private key signature.

Both the first transaction terminal 401 and the second transaction terminal 402 can have the functions of invoking the user certificates and the key algorithm through the respective security chips, so as to perform certificate exchange, identity authentication, and transaction factor calculations. The first transaction terminal 401 and the second transaction terminal 402 transmit the transaction factors to the respective operating institution back-ends by the respective terminal communication modules, so as to the operating institution back-ends confirm the information and initiate the payment process. The operating institution back-end verifies the transaction information uploaded by a terminal side, and initiates the payment process.

This embodiment of the present disclosure separates identity verification from the transaction by the networking capability and the capability of the security chip on the terminal side. The two parties involved in the transaction negotiate the transaction factor, which is checked and verified by the operating institution back-end to confirm the transaction intention and legitimacy of the transaction. The touch may be achieved when a screen is off. After the transaction authentication is complete, the payment is initiated by the back-end through the networking capability. There is no limit to the transaction distance, both supporting password-free and password-verified payments, and there is no need for a second touch during password verification. This embodiment of the present disclosure can rely on the digital currency at a user side or an account system of the institution back-end, and scalability is high.

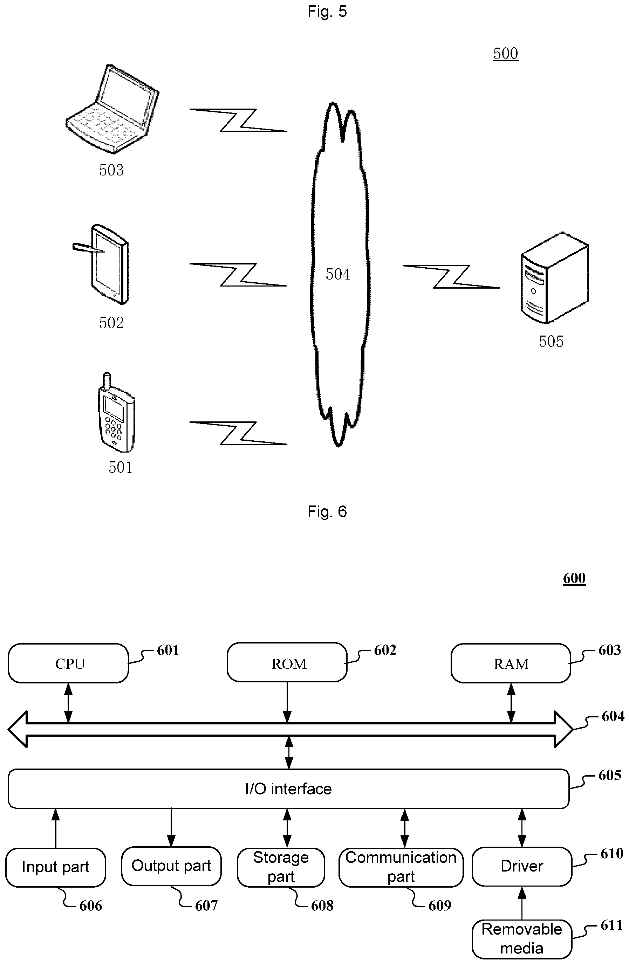

Fig. 5 illustrates an exemplary system architecture 500 that can apply a digital currency transaction method or transaction terminals according to an embodiment of the present disclosure.

As shown in Fig. 5, the system architecture 500 may include terminal devices 501, 502, and 503, a network 504, and a server 505. The network 504 is a medium configured to provide a communication link between the terminal devices 501, 502, and 503 and the server 505. The network 504 may have various connection types, such as wired and wireless communication links, or fiber optic cables.

The user may use the terminal devices 501, 502, and 503 to interact with the server 505 through the network 504 to receive or send messages, etc. The terminal devices 501, 502, and 503 may be provided with various communication client applications, such as shopping applications, web browser applications, search applications, instant messaging tools, email clients, and social platform software (for illustrative purposes only).

The terminal devices 501, 502 and 503 may be various electronic devices having display screens and supporting web browsing, which include but not limited to a smart phone, a tablet personal computer, a portable laptop, a desk computer, etc.

The server 505 may be a server that provides various services, such as a back-end management server (for illustrative purposes only) that supports shopping websites browsed by users using the terminal devices 501, 502, and 503. The back-end management server can perform analysis and other processing on received data such as transaction information and feed a processing result (such as a transaction result-for illustrative purposes only) back to the terminal devices.

It should be noted that the digital currency transaction method provided in this embodiment of the present disclosure is typically executed by the terminal devices 501, 502, and 503. Correspondingly, the transaction terminals may be specifically implemented as the terminal devices 501, 502, and 503.

It should be understood that the number of the terminal devices, networks and servers in Fig. 5 is for an illustrative purpose only. According to implementation needs, there may be any number of terminal devices, networks and servers.

Referring to Fig. 6 below, Fig. 6 illustrates a structural schematic diagram of a computer system 600 suitable for implementing the terminal device according to an embodiment of the present disclosure. The terminal devices shown in Fig. 6 are merely an example, which should not impose any limitations on functions and application ranges of this embodiment of the present disclosure.

As shown in Fig. 6, the computer system 600 includes a central processing unit (CPU) 601 which may perform various proper actions and processing according to programs stored in a read only memory (ROM) 602 or programs loaded from a storage part 608 to a random access memory (RAM) 603. Various programs and data required for the operation of the system 600 are further stored in the RAM 603. The CPU 601, the ROM 602, and the RAM 603 are connected with one another through a bus 604. An input/output (I/O) interface 605 is also connected to the bus 604.

Following components are connected to the I/O interface 605: an input part 606 including a keyboard, a mouse, etc.; an output part 607 including a cathode ray tube (CRT), a liquid crystal display (LCD), etc., and a speaker, etc.; the storage part 608 including a hard drive, etc.; and a communication part 609 including a network interface card such as a local area network (LAN) card and a modem. The communication part 609 performs communication processing via networks such as the Internet. A drive 610 is also connected to the I/O interface 605 as needed. A removable medium 611, such as a magnetic disk, an optical disk, a magneto-optical disk, and a semiconductor memory are installed on the drive 610 as needed, so that computer programs read therefrom are installed in the storage part 608 as needed.

Particularly, the foregoing process described with reference to the flowchart according to the embodiments disclosed in the present disclosure may be implemented as a computer software program. For example, an embodiment disclosed in the present disclosure includes a computer program product including a computer program carried on a computer-readable medium. The computer program includes program code for executing the method shown in the flowchart. In this embodiment, the computer program may be downloaded and installed from the network by the communication part 609, and/or be installed from the removable medium 611. The computer program, when executed by the central processing unit (CPU) 601, executes the foregoing functions limited in the system of the present disclosure.

It should be noted that the computer-readable medium shown in the present disclosure may be a computer-readable signal medium, or a computer-readable storage medium, or any combination thereof. For example, the computer-readable storage medium may include but is not limited to: electrical, magnetic, optical, electromagnetic, infrared, or semiconductor systems, apparatuses or devices, or any combination thereof. More specific examples of the computer-readable storage medium may include but not limited to: an electrical connection with one or more wires, a portable computer disk, a hard drive, a random access memory (RAM), a read only memory (ROM), an erasable programmable read only memory (EPROM or flash memory), fiber optics, a portable compact disc read only memory (CD-ROM), an optical storage device, a magnetic storage device, or any proper combination of the above. In the present disclosure, the computer-readable storage medium may be any tangible medium including or storing a program, and the program may be used by an instruction execution system, apparatus, or device, or used in conjunction with the instruction execution system, apparatus, or device. However, in the present disclosure, the computer-readable signal medium may include data signals propagated in a baseband or propagated as a part of a carrier wave, which carry computer-readable program code. The propagated data signals may have a plurality of forms, including but not limited to electromagnetic signals, optical signals, or any proper combination of the above. The computer-readable signal medium may be any computer-readable medium except the computer-readable storage medium. The computer-readable medium may send, propagate, or transmit programs used by the instruction execution system, apparatus, or device or used in conjunction with the instruction execution system, apparatus, or device. The program code included in the computer-readable medium may be transmitted by any proper medium, including but not limited to wireless, a wire, an optical cable, radio frequency (RF), etc., or any above proper combination of the above.

The flowcharts and block diagrams in the accompanying drawings illustrate system architectures, functions, and operations possibly implemented by the system, method, and computer program product according to the various embodiments of the present disclosure. In this regard, each block in the flowcharts or block diagrams may represent a module, a program segment, or part of the code, and the module, program segment, or part of the code includes one or more executable instructions for implementing specified logical functions. It should be noted that in some alternative implementations, functions marked in the blocks may also occur in an order different from that marked in the accompanying drawings. For example, two consecutively-shown blocks may actually be executed in parallel basically, but sometimes may also be executed in a reverse order, which depends on involved functions. It should be further noted that each block in the block diagrams or the flowcharts as well as a combination of the blocks in the block diagrams or the flowcharts may be implemented by using a dedicated hardware-based system that executes specified functions or operations, or using a combination of special hardware and computer instructions.

The modules described in the embodiments of the disclosure may be implemented through software or hardware. The described modules may also be arranged in a processor. For example, it may be described as: a processor includes a first communication module, an identity verification module, a transaction factor generation module, and a second communication module. The names of these modules do not limit the modules in some cases. For example, the first communication module may also be described as "a module configured to establish a communication connection with a second transaction terminal, and exchange user certificates with the second transaction terminal".

According to another aspect, the present disclosure further provides a computer-readable medium. The computer-readable medium may be included in the device described in the foregoing embodiment, and may separately exist without being assembled in the device. The computer-readable medium carries one or more programs. When the one or more programs are executed by the device, the device is made to include: after a first transaction terminal establishes a communication connection with a second transaction terminal, the first transaction terminal exchanges user certificates with the second transaction terminal, and the exchanged user certificates being used for mutual verification of user identities between the first transaction terminal and the second transaction terminal; after the first transaction terminal confirms that the user identity verification of both the first transaction terminal and the second transaction terminal succeeds, the first transaction terminal negotiates with the second transaction terminal to generate a transaction factor; and the first transaction terminal uploads first digital currency transaction information including the transaction factor to a first operating institution back-end system, and the first operating institution back-end system sends the first digital currency transaction information to a second operating institution back-end system to complete a digital currency transaction. The first operating institution back-end system is an operating institution back-end corresponding to the first transaction terminal. The second operating institution back-end system is an operating institution back-end corresponding to the second transaction terminal. The transaction factor is used by the second operating institution back-end system to verify the first digital currency transaction information.

According to the technical solution of this embodiment, after establishing the communication connection with the second transaction terminal, the first transaction terminal exchanges the user certificates with the second transaction terminal for mutual verification of the user identities between the two parties. After confirming the successful user identity verification of the two parties, the first transaction terminal negotiates with the second transaction terminal to generate the transaction factor, and uploads the first digital currency transaction information including the transaction factor to the first operating institution back-end system, and the first operating institution back-end system sends the first digital currency transaction information to the second operating institution back-end system to complete the digital currency transaction. By utilizing the networking capability and the capability of the security chip on the terminal side, separation between identity verification and the transaction is achieved, the user interaction steps can be reduced, the transaction process is simplified, there is no limit to the transaction distance, both password-free and password-verified payments are supported, and there is no need for a second touch during password verification. The touch time is greatly shortened, and the transaction security can be enhanced.

The foregoing specific implementations do not limit the scope of protection of the present disclosure. Those skilled in the art should understand that various modifications, combinations, sub-combinations, and substitutions may occur based on design demands and other factors. Any modification, equivalent replacement, improvement, etc., made within the spirit and principle of the present disclosure shall fall within the scope of protection of the present disclosure.

## Claims

1. A digital currency transaction method, comprising:
exchanging, by a first transaction terminal, user certificates with a second transaction terminal after establishing a communication connection with the second transaction terminal, the exchanged user certificates being used for mutual verification of user identities between the first transaction terminal and the second transaction terminal;
negotiating, by the first transaction terminal, with the second transaction terminal to generate a transaction factor after confirming that the user identity verification of both the first transaction terminal and the second transaction terminal succeeds; and
uploading, by the first transaction terminal, first digital currency transaction information comprising the transaction factor to a first operating institution back-end system, and sending, by the first operating institution back-end system, the first digital currency transaction information to a second operating institution back-end system to complete a digital currency transaction, wherein the first operating institution back-end system is an operating institution back-end corresponding to the first transaction terminal, the second operating institution back-end system is an operating institution back-end corresponding to the second transaction terminal, and the transaction factor is configured to verify the first digital currency transaction information by the second operating institution back-end system.

2. The method as claimed in claim 1, wherein the first transaction terminal establishes the communication connection with the second transaction terminal through short-range communication.

3. The method as claimed in claim 1, wherein the first transaction terminal uses an operating institution certificate that corresponds to the second transaction terminal to verify a user certificate of the second transaction terminal, so as to verify a user identity of the second transaction terminal, wherein the operating institution certificate is stored in a local security chip of the first transaction terminal.

4. The method as claimed in claim 1 or 4, wherein the first digital currency transaction information further comprises relevant information of a digital currency, wherein the relevant information of the digital currency comprises a digital currency string and/or account information of the digital currency.

5. The method as claimed in claim 1, wherein before the uploading, by the first transaction terminal, first digital currency transaction information comprising the transaction factor to a first operating institution back-end system, the method comprises:
adding a private key signature of the first transaction terminal to the first digital currency transaction information, wherein the private key signature is configured to verify transaction intention of the first transaction terminal by the first operating institution back-end system.

6. The method as claimed in claim 1, wherein the first transaction terminal generates the transaction factor by invoking a preset key algorithm through a local security chip, wherein the transaction factor is in a form of a character string.

7. The method as claimed in claim 1, wherein the first transaction terminal uploads the first digital currency transaction information comprising the transaction factor to the first operating institution back-end system after determining that a current transaction adopts a password-free transaction or a current inputted transaction password is correct.

8. A first transaction terminal for digital currency transaction, comprising:
a first communication module, configured to establish a communication connection with a second transaction terminal, and exchange user certificates with the second transaction terminal, a user certificate of the first transaction terminal being configured to verify a user identity of the first transaction terminal by the second transaction terminal;
an identity verification module, configured to use a user certificate of the second transaction terminal to verify a user identity of the second transaction terminal;
a transaction factor generation module, configured to negotiate with the second transaction terminal to generate a transaction factor after confirming that user identity verification of both the first transaction terminal and the second transaction terminal succeeds; and
a second communication module, configured to upload first digital currency transaction information comprising the transaction factor to a first operating institution back-end system, wherein the first operating institution back-end system sends the first digital currency transaction information to a second operating institution back-end system to complete a digital currency transaction, the first operating institution back-end system is an operating institution back-end corresponding to the first transaction terminal, the second operating institution back-end system is an operating institution back-end corresponding to the second transaction terminal, and the transaction factor is configured to verify the first digital currency transaction information by the second operating institution back-end system.

9. The first transaction terminal as claimed in claim 8, wherein the first communication module is further configured to establish the communication connection with the second transaction terminal through short-range communication.

10. The first transaction terminal as claimed in claim 8, wherein the identity verification module is further configured to use an operating institution certificate that corresponds to the second transaction terminal to verify the user certificate of the second transaction terminal, so as to verify the user identity of the second transaction terminal, wherein the operating institution certificate is stored in a local security chip of the first transaction terminal.

11. The first transaction terminal as claimed in claim 8, wherein the first digital currency transaction information further comprises relevant information of a digital currency, wherein the relevant information of the digital currency comprises a digital currency string and/or account information of the digital currency.

12. The first transaction terminal as claimed in claim 8 or 11, further comprising a signature module, configured to:
add a private key signature of the first transaction terminal to the first digital currency transaction information, wherein the private key signature is configured to verify transaction intention of the first transaction terminal by the first operating institution back-end system.

13. The first transaction terminal as claimed in claim 8, wherein the transaction factor generation module is further configured to generate the transaction factor by invoking a preset key algorithm through a local security chip, wherein the transaction factor is in a form of a character string.

14. The first transaction terminal as claimed in claim 8, wherein the second communication module is further configured to upload the first digital currency transaction information comprising the transaction factor to the first operating institution back-end system after determining that a current transaction adopts a password-free transaction or a current inputted transaction password is correct.

15. A digital currency transaction system, comprising the first transaction terminal as claimed in any one of claims 8 to 14, and further comprising a second transaction terminal, a first operating institution back-end system, and a second operating institution back-end system, wherein the first operating institution back-end system is an operating institution back-end corresponding to the first transaction terminal, and the second operating institution back-end system is an operating institution back-end corresponding to the second transaction terminal;
wherein the second transaction terminal is, configured to use the user certificate of the first transaction terminal to verify the user identity of the first transaction terminal, and to upload second digital currency transaction information comprising the transaction factor to the second operating institution back-end system;
the first operating institution back-end system is, configured to upload the first digital currency transaction information to the second operating institution back-end system; and
the second operating institution back-end system is, configured to verify the first digital currency transaction information based on the second digital currency transaction information, and to perform the digital currency transaction in a case that verification of the first digital currency transaction information succeeds.

16. The system as claimed in claim 15, wherein both the first digital currency transaction information and the second digital currency transaction information further comprise a transaction amount, the first digital currency transaction information further comprises a second operating institution identifier, and the second digital currency transaction information further comprises a first operating institution identifier; and
the second operating institution back-end system is further configured to:
verify the first digital currency transaction information by verifying transaction factors, operating institution identifiers, and transaction amounts in the second digital currency transaction information and the first digital currency transaction information.

17. An electronic device, comprising:
one or more processors; and
a memory configured to store one or more programs,
wherein when the one or more programs are executed by the one or more processors, the one or more processors implement the method as claimed in any one of claims 1 to 7.

18. A computer-readable medium, storing a computer program, wherein the computer program, when executed by a processor, implements the method as claimed in any one of claims 1 to 7.
